Europäisches Patentamt

(19) European Patent Office

Office européen des brevets

(11) Publication number: **0 030 230 B2**

# (12) NEW EUROPEAN PATENT SPECIFICATION

(45) Date of publication of the new patent specification:
26.07.89

(21) Application number: 79901419.6

(22) Date of filing: 14.05.79

(86) International application number:
PCT/US 79/00317

(87) International publication number:
WO 80/02585 (27.11.80 Gazette 80/27)

(51) Int. Cl.⁴: **F 04 B 17/00, F 02 B 37/00, H 02 K 7/18, F 02 C 7/22, F 02 B 33/32, F 01 B 25/06, F 01 D 17/06, F 16 C 33/66**

(54) TURBOCHARGER FOR USE WITH AN INTERNAL COMBUSTION ENGINE, OR TURBOJET.

(43) Date of publication of application:
17.06.81 Bulletin 81/24

(45) Publication of the grant of the patent:
31.07.85 Bulletin 85/31

(45) Mention of the opposition decision:
26.07.89 Bulletin 89/30

(84) Designated Contracting States:
DE FR

(73) Proprietor: OSBORN, Norbert L., 151 Regal Row Suite 120, Dallas TX 75247 (US)

(72) Inventor: OSBORN, Norbert L., 151 Regal Row Suite 120, Dallas TX 75247 (US)

(74) Representative: UEXKÜLL & STOLBERG Patentanwälte, Beselerstrasse 4, D-2000 Hamburg 52 (DE)

(56) References cited:
CH-A- 337 685
DE-A- 2 716 470
DE-B- 1 056 428
DE-B- 1 069 950
FR-A- 1 169 550
GB-A- 328 263
US-A- 925 065
US-A- 1 401 349
US-A- 1 921 907
US-A- 2 413 285
US-A- 2 414 551
US-A- 2 445 661
US-A- 2 492 672
US-A- 2 904 307
US-A- 2 911 138
US-A- 2 973 136
US-A- 2 991 926
US-A- 2 997 229
US-A- 3 004 806

(56) References cited: (continuation)
US-A- 3 033 519
US-A- 3 068 638
US-A- 3 071 313
US-A- 3 071 691
US-A- 3 143 103
US-A- 3 173 241
US-A- 3 195 805
US-A- 3 570 240
US-A- 3 673 798
US-A- 3 749 512
US-A- 3 803 691
US-A- 3 814 549
US-A- 3 825 311
US-A- 3 994 630
US-A- 4 130 989

ACTORUM AG

## Description

The invention relates to a turbocharger for use with an internal combustion engine or a turbojet, having a shaft supported in a housing, a turbine rotor attached to said shaft for receiving driving gases, a compressor rotor fitted on said shaft for rotation with said turbine rotor, said compressor rotor supplying air to the engine from an air inlet of said housing, and bearing means for rotatably supporting said shaft such that said compressor and turbine rotors are overhung to one side of said bearing means with said bearing means positioned such that said turbine rotor is separated from said bearing means by said compressor rotor, wherein a plurality of nozzle vanes is spaced about said turbine rotor and in the inlet of said turbine rotor through which gas is fed to said turbine rotor and wherein a control means is provided for rotating said nozzle vanes to vary the flow of gas to the turbine rotor.

In a prior turbocharger of this type (DE-B-1 056 428) the turbine rotor and the compressor rotor are arranged back-to-back and the rotor arrangement forms a part of the separating wall separating the gas flow area from the area for compressed air. Radially outwardly of the circumference of such rotor arrangement stationary housing walls are provided which in that portion separate the flow areas of the compressor and of the turbine.

Since the rotors of such prior turbocharger rotate in relation to the stationary housing walls located adjacent to the circumference of the rotor arrangement, a annular gap is provided. Such gap is used to press compressed air from the compressor into the turbine to effect cooling of the turbine rotor. Additional cooling is achieved by feeding a cooling fluid to the part of the housing separating the flow areas of the turbine and the compressor.

The control means for rotating the nozzle vanes is located radially outwardly of the rotor arrangement in a space formed by the stationary housing walls.

The prior turbocharger provides for a reduced efficiency due to the feeding of compressed air from the compressor to the turbine for cooling and due to the cooling of the turbine.

A somewhat similar turbocharger is described in DE-C-762 097 which, however, is not provided with rotatable nozzle vanes about the turbine rotor and therefore also not with control means therefore.

In such prior turbocharger there is only a very small distance between the compressor rotor and turbine rotor so that a short shaft is provided which can be relatively easily supported in a cantilever manner by the sole ball bearing. However, such arrangement results in a relatively poor insulation of the compressor rotor and the ball bearing from the heat of the turbine rotor and seems to provide for cooling of the turbine rotor through the annular air gap between the rotor arrangement and the radially adjacent stationary housing walls.

It is an object of the invention to provide for a compact turbocharger or turbojet having the compressor and turbine rotors overhung to one side of the bearing means for the rotor shaft with improved heat insulation of the turbine rotor and with reduced lubrication requirements for the bearing means.

To solve such object a turbocharger or a turbojet as mentioned above is improved in that an air space gap is provided intermediate of said compressor rotor and said turbine rotor which is defined in axial direction of said shaft by a compressor housing backwall and a turbine housing backwall and in which air space gap said control means is situated.

Therefore, the control means for the nozzle vanes is located between the compressor rotor and the turbine rotor which therefore no longer form separating walls for separating the flow areas of the turbine and the compressor. But the air gap contributing to the heat insulation of the compressor rotor and the bearing means is defined by walls of the housing. Surprisingly, such bearing means are still sufficient to support the shaft although the distance between the turbine rotor and the compressor rotor has been increased to form the air gap and thereby provides space to locate the control means between such rotors. Such insulation reduces the lubrication requirements for the bearing means.

Control arrangements for varying the velocity of the gas to the turbine rotor of a turbocharger are known (US-A-3 074 689; US-A-3 089 679; US-A-3 173 241; FR-A-1 169 550; DE-A-2 253 231; GB-A-1 513 214). In all such turbo machinery many efforts were made to find suitable locations for such control arrangements within the overall arrangement. In all cases where control arrangements were provided similar to the control arrangement in the turbocharger or turbojet according to the invention, it was necessary to provide for two bearing means supporting the shaft at both sides of the compressor and turbine rotors or even in an area near the turbine rotor as shown in GB-A-1 513 214.

Surprisingly the turbocharger or turbojet according to the invention does not require two bearing means located at both sides of the compressor turbine rotor or at both sides of one of these rotors although it is provided with control means for adjusting the nozzle vanes located in the inlet of the turbine rotor which control means is located between the turbine rotor and the compressor rotor and provides an additional heat insulation of both, the compressor rotor and the sole bearing means.

As the bearing means are effectively insulated from the heat of the turbine rotor only limited lubrication of the bearing means is required and such lubrications may be effected by a lubricant mist or by means of wicks whereas in prior turbochargers a continuous oil flow was required to also carry away the heat transferred into the bearing means from the turbine rotor.

For a more complete understanding of the present invention, and for further details and advantages thereof, reference is now made to the following description taken in conjunction with the accompanying drawings, in which:

Figure 1 is a perspective view of a turbocharger;

Figure 2 is a vertical section taken along lines 2–2 of the turbocharger illustrated in Figure 1;

Figure 3 is an enlarged view of the bearing assemblies supporting the compressor and turbine shaft;

Figure 4 is an enlarged section view taken along line 4–4 of Figure 2 with the compressor backwall removed for clarity;

Figure 5 is a partially broken away end view as viewed from line 5–5 of Figure 2 looking in the direction of the arrows;

Figure 6 is an exploded perspective view showing the turbine rotor, compressor-turbine shaft, the compressor and turbine backwalls, compressor bushing, compressor rotor and retaining sleeve;

Figure 7 is a section view taken along line 9–9 of Figure 2;

Figure 8 is an alternative embodiment of the present invention showing the use of a spring member between the retaining sleeve and the compressor rotor;

Figure 9 is a front view looking into the inlet port of the turbocharger illustrated in Figure 1;

Figure 10 is a section view taken along line 10–10 of Figure 9;

Figure 11 is a section view taken along line 11–11 of Figure 9;

Figure 12 is a section view taken along line 12–12 of Figure 9;

Figure 13 illustrates an alternative embodiment of the present invention wherein the forward diffuser wall is modified to modify the turbocharger characteristics;

Figure 14 illustrates a compressor performance map for a conventional turbocharger;

Figure 15 illustrates a compressor performance map for the turbocharger illustrated in Figures 1–13;

Figure 16 illustrates a vertical section of an alternative embodiment of the turbocharger of Figures 1–13;

Figure 17 illustrates a vertical section of the upper half of a turbojet;

Figure 18 illustrates a vertical section of a turbofan;

Figure 19 illustrates a vertical section of the upper half of an alternative embodiment of the turbojet illustrated in Figure 17;

Figure 20 is a section view taken on line 20–20 of Figure 19;

Figure 21 illustrates a vertical section showing the upper half of a turbofan; and

Figure 22 is a vertical section of an electric generator adapted to the turbocharger of Figures 1–13 and for adaption to the turbojets and turbofan of Figures 17–21.

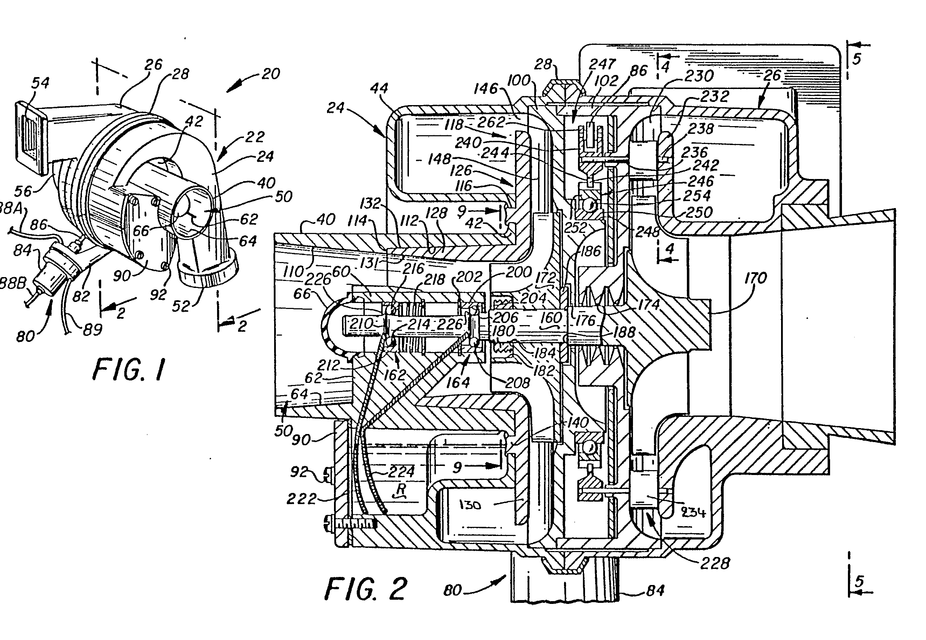

Figure 1 is a perspective view of a turbocharger 20 embodying the present invention. The turbocharger includes an outer structure 22 consisting of a compressor housing unit 24 coupled to a turbine housing unit 26 by a V-clamp band 28.

Referring to Figures 1 and 2, compressor housing unit 24 includes a tubular inlet port 40 with a transverse wall 42 attached to one end of port 40 and extending outwardly therefrom. A circumferential chamber 44 is attached from wall 42. Inlet port 40 defines a compressor air inlet 50 and circumferential chamber 44 defines a compressor exhaust 52. Turbine housing 26 defines a turbine air inlet 54 and a turbine exhaust 56.

In operation of the turbocharger, air is drawn into inlet 50 and compressed air is discharged from exhaust 52 to an internal combustion engine to which the turbocharger is mounted. Exhaust air from the engine is channeled into turbine air inlet 54 to drive the turbocharger turbine and is exhausted through turbine exhaust 56.

Referring still to Figures 1 and 2, a bearing support cylinder 60 is mounted within inlet port 40 by a plurality of vanes 62 extending from the inside wall surface 64 of inlet port 40. A cap 66 is mounted over the end of support cylinder 60. A piston type actuator 80 is mounted by bracket 82 (Figure 1) to turbine housing 26. Actuator 80 includes a controller 84 operated to extend and retract control rod 86 as will be discussed hereinafter in greater detail. Air lines 88 and 89 provide air to controller 84 as necessary to operate rod 86. An oil reservoir cover plate 90 is attached to compressor housing unit 24 by a plurality of screws 92.

Referring specifically to Figure 2, a compressor backwall 100 and a turbine backwall 102 are positioned intermediate of compressor housing unit 24 and turbine housing unit 26 when these two units are assembled. These four components are piloted one to another and held in assembly by V-clamp 28. As can be appreciated from a close review of Figure 2, only a single V-clamp is required to hold the entire assembly together. As previously described, compressor housing unit 24 includes a tubular inlet port 40 with a transverse wall 42 attached to one end thereof to one of the inlet ports and extending outwardly therefrom. A circumferential chamber 44 is attached to the end of wall 42 remote from inlet port 40 and has a varying area around its circumference increasing to the discharge provided by compressor exhaust 52 (Figure 1).

Inlet port 40 has a first inside wall portion 110 having a converging diameter toward wall 42 and a second inside wall portion 112 joined to first inside wall portion 110 by a step 114. The second inside wall portion 112 has a diverging diameter toward wall 42. Wall 42 has a plurality of circumferentially spaced apertures 116 therethrough. Chamber 14 has an opening 118 substantially in the plane of wall 42 in addition to compressor exhaust 52.

A forward compressor wall insert 126 includes a tubular throat 128 and a circular disc 110 attached transversely from one end of throat 128. Throat 128 has an inside wall surface 131 having a diameter converging toward disc 130 and an outer surface 132 having a diameter diverging toward disc 130. The diverging diameter surface 132 corresponds to the diverging surface of inside wall portion 112 of inlet port 40 such that throat 128 may be inserted within and mated with inlet port 40. The converging diameter inside wall surface 131 of throat 128 corresponds to the extension of converging diameter of first inside wall portion 110 of inlet port 40. When insert 126 is mated into inlet port 40, a continuous converging diameter is provided from the inlet of port 40 inwardly into the turbocharger.

A plurality of rivet-like protrusions 140 extend from disc 130 and correspond to apertures 116 in wall 42. With the insert engaged to compressor housing 24 with the end of throat 128 engaging step 114 of inlet port 40, protrusions 140 are engaged through apertures 116 with disc 130 abutting the corresponding surface of wall 42. As is shown in Figure 2, protrusions 140 have been inserted into apertures 116 and the heads thereof deformed to attach insert 126 to housing 24. Disc 130 extends beyond wall 42 to partially cover opening 118 of chamber 44. A circumferential gap 146 is formed between the outer tip of disc 130 and the wall of chamber 44, and a diffuser area 148 is formed between disc 130 and compressor backwall 100 between centrifugal flow compressor rotor 172 and gap 146 leading to chamber 44.

Referring still to Figure 2, bearing support cylinder 60 is supported concentrically within inlet port 40 by a plurality of vanes 62 extending inwardly from wall surface 64 of port 40. Turbocharger 20 further includes a shaft 160 supported for rotation in bearing support cylinder 60 by two ballbearing assemblies 162 and 164. A radial flow turbine rotor 170 is mounted at one end of shaft 160 and a centrifugal flow compressor rotor 172 is mounted intermediate of turbine rotor 170 and bearing assemblies 162 and 164. Shaft 160 passes through aperture 176 in compressor backwall 100 and labyrinth seal 174 in turbine backwall 102.

Turbine rotor 170 is fixedly attached to shaft 160, such as by welding, and compressor rotor 172 is retained in position on shaft 160 by retainer nut 180. Compressor rotor 172 is drilled to receive shaft 160 and counterbored to form a bore 182. Bore 182 has a diameter larger than the outer diameter of retainer nut 180 such that retainer nut 180 may be pressed onto shaft 160 into engagement with the bottom wall 184 of bore 182 to retain the compressor rotor in position on shaft 160. A compressor rotor shim 186 is positioned between compressor rotor 172 and a step 188 in shaft 160 to accurately position the compressor rotor in the axial direction.

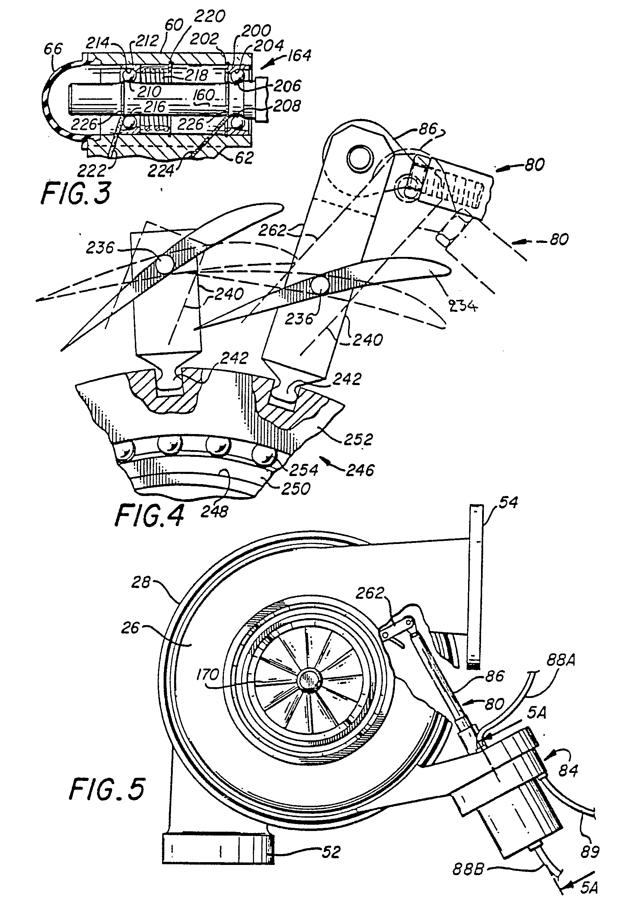

Referring to Figures 2 and 3, a ring 200 is fitted within the end of cylinder 60 adjacent compressor rotor 172 and is prevented from moving into cylinder 60 by a retaining ring 202 attached to cylinder 60. Outer raceway 204 of bearing assembly 164 is formed in ring 200, the inner raceway 206 being integrally formed in shaft 160. Balls 208 are engaged between the inner and outer raceways to form bearing assembly 164.

Bearing assembly 162 includes inner raceway 210 formed integrally in shaft 160 and an outer ring 212 slidable within cylinder 60 with an outer raceway 214 formed therein for receiving balls 216. A compression spring 218 is engaged between ring 212 and a retaining ring 220 fixed within cylinder 60 and biases ring 212 outwardly to fix the position of balls 216 and 208 in bearing assemblies 162 and 164, respectively, thereby fixing the position of shaft 160.

As is shown in Figures 2 and 3, outer raceway 204 is formed in ring 200 with the ball radius on only one side. Thus, the assembly of bearing assembly 164 is made by positioning a full complement of balls 208 in raceway 206, and engaging ring 200 therearound. Similarly, outer raceway 214 is formed in ring 212 with the ball radius on only one side. Balls 216 of bearing assembly 162 are assembled by moving outer ring 212 to compress spring 218 and inserting a full complement of balls 216 in raceway 214 of shaft 160. By releasing ring 212, spring 218 automatically forces the ring into engagement with balls 216 to form bearing assembly 162 while simultaneously engaging ring 200 against balls 208 of bearing assembly 164.

Alternatively, less than a full complement of balls 208 and 216 may be used in bearing assemblies 162 and 164 by the use of an appropriate retainer. Depending upon the application, an oil impregnated retainer or a sacrificial retainer which replenishes a self-lubricating coating to the balls may be used. The mounting of shaft 160 within cylinder 60 is completed by the engagement of cap 66 on the end of cylinder 60 to close the opening in cylinder 60 remote from compressor rotor 172.

The use in the present bearing system of the ball bearing arrangement employing integral inner raceways permits a larger diameter shaft and thus provides a very "stiff" shaft. Additionally, this bearing arrangement provides a very tight bearing system permitting very little radial or axial movement. As a result, the present bearing system substantially reduces the clearance required between the compressor and turbine and surrounding housing, and concentricity problems are minimized.

In a preferred embodiment, bearing assemblies 162 and 164 are "starved" of oil. The only lubrication provided to the bearing assemblies is through wicks 222 and 224 which transfer oil from a reservoir R by capillary action to ramps or slingers 226. Oil supplied to slingers 226 is projected by centrifugal force to bearing assemblies 162 and 164 during rotation of shaft 160.

In this way, the use of engine oil as a lubricant for the turbocharger bearings, and the associated plumbing and seals are eliminated. Moreover, the failures resulting from the use of contaminated engine oil as a lubricant or the lack of engine oil during starts is avoided. Moreover, no oil seals are required and bearing failure resulting from the failure of seals is also eliminated.

Alternatively, the bearing assemblies may be permanently lubricated with a heavy consistency oil or grease which is packed into the raceways and around the balls of the bearing assemblies. As another alternative, an oil impregnated phenolic retainer may be used to provide lubricant to the balls for a considerable period. In either of these cases, the need for wicks 222 and 224 and slingers 226 would be eliminated although with a reduced bearing life.

In conventional turbochargers where journal bearings and disc type thrust bearings are employed, continuous lubrication of the bearings is required. Additionally, because the turbine is subjected to temperatures up to 871°C, where the bearings are adjacent the turbocharger turbine, continuous lubrication is required to sufficiently cool the bearings to prevent failure through overheating. Even ball bearings would require a continuous flow of oil for cooling. The ability of the present system to successfully function without conventional flood lubrication used to both lubricate and cool the bearings is the result of the particular arrangement of the type of bearings used in the present embodiment and the relative location of the bearings to the compressor and turbine.

As will be described hereinafter in greater detail, because the present embodiment eliminates the need for a continuous flow of oil for bearing lubrication and cooling, the present turbocharger may be mounted at any desired orientation. In contrast, conventional turbochargers have been severely limited as to their possible orientation.

In the present turbocharger, the journal and disc bearings of conventional turbochargers are replaced by the more precise ball type bearing assemblies, thereby eliminating the need for a continuous flow of lubrication for the bearings. Additionally, both the compressor and the turbine of the present turbocharger are overhung to one side of the bearing assemblies, and the turbine is maximally removed from the bearing assemblies with the compressor positioned between the bearing assemblies and the turbine. As this arrangement provides sufficient thermal insulation between the turbine and the bearing assemblies, the bearings will not be sufficiently heated as to require conventional lubrication methods.

The back to back compressor/turbine arrangement of the present invention not only reduces substantially the heat conducted to the bearing assemblies but also minimizes the thermal expansion effects, thereby lowering the blade tip clearances required. This arrangement further eliminates the conventional bearing housing and provides a more compact package than present straddle mounted rotors having the support bearings intermediate of the compressor and turbine.

Additionally, the use of antifriction ball bearing assemblies 162 and 164 provides much better control over the radial and axial movement of the compressor and turbine, thereby allowing reduced blade tip clearance. This in turn appreciably improves the compressor and turbine efficiency. Compared to journal bearings, the use of the antifriction ball bearing assemblies 162 and 164 also reduces the turbine work required to drive the bearings. This in turn reduces the engine back pressure resulting in the improvement of the specific fuel consumption as well as enhancing the ability to accelerate the rotor.

Turbocharger 20 is provided with a nozzle area control structure 228 for selectively varying the turbine nozzle area to control the speed or pressure output of the turbocharger. Referring to Figures 1 and 2, exhaust gas from the internal combustion engine on which the turbocharger is mounted is injected into the turbocharger through turbine air inlet 54 and channeled against the blades of turbine rotor 170 through a nozzle area 230 formed by turbine backwall 102, a wall 232 parallel thereto and the nozzle vanes 234. This nozzle area is controlled by structure 228 including a plurality of movable nozzle vanes 234 positioned circumferentially about the nozzle area and rotatable to vary flow velocity and angle of exhaust gas to turbine rotor 170. Referring to Figures 2 and 4, vanes 234 include trunnions 236 and 238 extending from opposite sides thereof. Trunnion 236 extends through turbine backwall 102 and is attached to actuation lever 240. Trunnion 238 extends into wall 232.

A nipple 242 is formed on one end of each actuation lever. These nipples extend into radial slots 244 formed in a control ring 246. Control ring 246 and actuation levers 240 are situated in air space gap 247 intermediate of compressor rotor 172 and turbine rotor 170. Control ring 246 is concentrically positioned about the axis of shaft 160 and is received on a cylindrical surface 248 extending from compressor backwall 100.

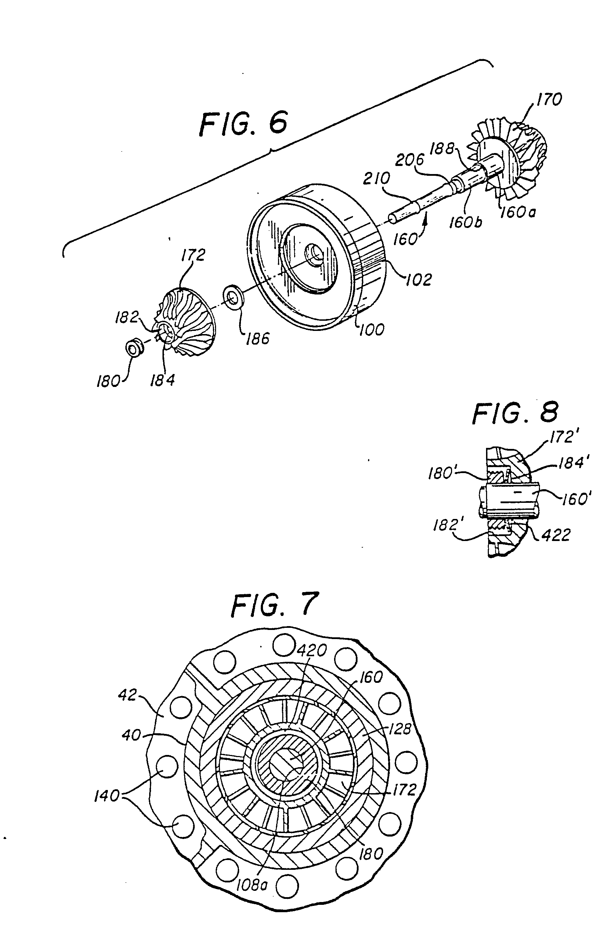

The control ring 246 includes an inner ring 250 and an outer ring 252 formed with an inner and outer raceway, respectively, for receiving a plurality of balls 254 therebetween. Inner ring 250 is fixedly attached to the cylindrical surface 248 extending from compressor backwall 100, and outer ring 252 rotates angularly relative to the inner ring. Referring to Figure 4, it is seen that by the rotation of outer ring 252, each of the actuation levers 240 is rotated about the axes of trunnions 236 and 238, resulting in the simultaneous rotation of each nozzle vane 234. As is shown in Figures 4 and 5, one of the actuation levers 240 is provided with an extension 262. Control rod 86 is attached to the end of extension 262 remote from nipple 242. Control rod 86 includes a threaded eye bolt 86a attached to the extension 262 by an axis pin. The opposite end of eye bolt 86a is threadedly received within control rod 86 and is adjustable therein to allow for the readjustment of nozzle vanes 234 about their rotational axes. By the movement of control rod 86, actuation lever 240 is pivoted to angularly rotate outer ring 252 of control ring 246 thereby rotating each of the other actuation levers 240 and nozzle vanes 234 attached thereto.

Referring to Figure 5, an actuator for use on an otto cycle engine is shown. In the system illustrated, control rod 86 is controlled by a piston type actuator 80. Alternatively, the pistons could be replaced by diaphragms. Actuator 80 is controlled by compressor discharge pressure fed into controller 84 through line 88. Increased pressure into actuator 80 causes the extension of control rod 86 and the corresponding opening of the compressor nozzle area. The controller is described in co-pending European Patent Application EP-A-111 781 which is a divisional application of the present application.

Figure 4 shows in phantom and solid lines nozzle vanes 234 in closed and open positions. It will be appreciated that each of the nozzle vanes is set by the rotation of control ring 246 through the movement of a single control rod 86 controlled by a single actuation lever 240.

Therefore, the present embodiment provides a turbocharger with the turbine nozzle area controlled by the movement of a single control ring rotating a plurality of actuator arms circumferentially spaced about the control ring. Moreover, the control ring and actuation levers are positioned in the unused air gap space existing between the turbocharger turbine and compressor thereby making a very compact unit. Moreover, the particular location of the linkage further insulates the bearing assemblies from the heat to which the turbine and the surrounding area is subject. In this way, the bearing assemblies may be oil starved or limitedly lubricated. This in turn eliminates the need for conventional lubrication by use of engine oil and the associated plumbing requirements required by such a lubrication method. This, of course, make the turbocharger of the present embodiment less expensive to construct and operate as well as more reliable.

Moreover, the use in the present embodiment of ball bearing supports, and the corresponding elimination of thrust and disc type bearings, provides for a more controlled or "stiffer" turbine and compressor rotating assembly thereby allowing smaller clearances between both the turbine and the compressor and their surrounding structures. For example, in the present embodiment, the compressor blade height for a turbocharger for use with relatively small internal combustion engines could be on the order of 5 mm. The use of the ball bearing assemblies described above permits the design of the compressor with only a 0.13 mm clearance amounting to only 2.5 percent of the overall height of the blade. By contrast, were a journal and disc type bearing to be employed, a substantially greater clearance would be required (normally about 0.38 mm). As a result, the present embodiment is particularly adaptable to the construction of a turbocharger for smaller internal combustion engines where the smaller blade heights require closer clearances between the blades and the surrounding structure.

The use of ball bearings and their resultant lower frictional losses when compared to the journal and disc type bearings also makes possible for the first time the efficient use of a turbocharger which produces less turbine horsepower without losing a substantial portion of the turbine horsepower to bearing losses and friction. Where a journal and disc type bearing could account for a 3–3.7 kw loss in friction, the loss in friction by the present arrangement would be on the order of 0.075–0.3 kw.

Figure 6 illustrates compressor rotor 172 and retainer nut 180 separated from turbine rotor 170 and compressor-turbine shaft 160. As is shown in Figure 6, turbine rotor 170 is attached to one end of shaft 160, such as by welding or other suitable permanent attachment means. The shaft, prior to its attachment to turbine rotor 170, is formed with an enlarged bearing surface 160a, and a step 188 to a narrower diameter shaft portion 160b. As has been previously discussed, raceways 206 and 210 are formed directly in shaft 160.

In assembly, shaft 160 is inserted through apertures in compressor backwall 100 and turbine backwall 102. Shim 186 is positioned over shaft 160 into engagement with step 188 on shaft 160. Compressor rotor 172 is engaged over shaft 160 and rests on shaft portion 160b. Retainer nut 180 is then pressed onto portion 160b into bore 182 of compressor rotor 172 and into engagement with bottom wall 184 of bore 182. Nut 180 consists of a sleeve having a smooth inner bore 180a therethrough. The bore through nut 180 forms an interference fit with portion 160b of shaft 160. The interference, in one embodiment of the invention, is on the order of 0.025 mm.

Because the inner raceways are formed directly in the compressor-turbine shaft, the shaft must be heat treated to extremely high degrees of hardness. As a result, the present retaining sleeve secures compressor rotor 172 to shaft 160 without necessitating the grinding or cutting of threads into the hardened shaft. Thus, the cost and problems associated with forming threads on a heat treated shaft are eliminated. Further, because the shaft is substantially hardened, the retaining nut 180 may be pressed onto the shaft and withdrawn without damage to the shaft surface.

As also shown in Figure 6, nut 180 is formed with threads around the outer facing surface thereof. Bore 182 is of a sufficient diameter as to provide a gap 420 (Figure 7) between bore 182 and the threads on the outer surface of nut 180. This gap permits the insertion of an appropriate internally threaded tool for withdrawing the nut from the shaft for removal of the compressor rotor.

In connection with the retainer sleeve arrangement it is referred to co-pending European Patent Application EP-A-111 782 which is a divisional application of the present application.

In some applications, a spring device may be required between the retainer nut and the compressor rotor to maintain an axial force on the compressor rotor during expansion and contraction of components of the turbocharger. Unlike an internally threaded nut engaged on a threaded shaft, the retainer nut of the present embodiment does not have the capability of developing high compressive loading in the compressor rotor or tension in the compressor-turbine shaft when mounted in position. Therefore, in the alternative embodiment illustrated in Figure 8, a cone shape or Belville spring 422 is inserted between the retainer nut 180' and the compressor rotor 172'.

Because the components in the embodiment illustrated in Figure 8 are identical or correspond to elements in the embodiment illustrated in Figures 2 and 6–7, the same numeral, with the designation prime (') will be used to identify like or corresponding parts to those in the embodiment illustrated in Figures 2 and 8–9. Referring now to Figure 8, shaft 160' is engaged through compressor rotor 172'. Retainer nut 180' is engaged over the end of shaft 160' with Belville spring 422 mounted on shaft 160' between nut 180' and wall 184' of bore 182' in compressor rotor 172'. Belville spring 422 is initially compressed as retainer nut 180' is mounted on shaft 160'. The engagement of nut 180' against shaft 160' is sufficient to overcome any expansive forces developed between nut 180' and compressor rotor 172' by Belville spring 422. Instead, the compression of spring 422 between rotor 172' and nut 180' induces an axial load in rotor 172'. Thus, with spring 422 in place, contractions or expansions in shaft 160' or compressor rotor 172' will not result in a zero engagement force between nut 180' and rotor 172'.

As to the compressor housing unit 24 and forward compressor wall insert 126 shown in Figure 2 and their production it is referred to co-pending European Patent Application EP-A-122 328 which is a divisional application of the present application.

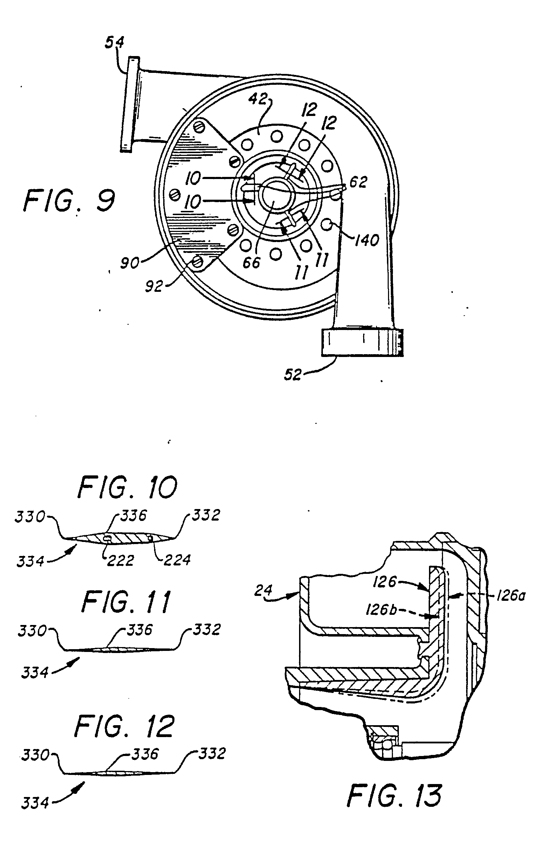

Figure 9, and section views 10, 11 and 12, illustrate the positioning and configuration of vanes 62. Referring to Figures 10, 11 and 12, each of the vanes 62 has a leading edge 330 and a trailing edge 332 with a thicker intermediate midsection 334. In each case, the thickest midsection is that indicated by a line 336 defining the parting line between molds used in the formation of housing 24. Thus, vanes 62 may be formed by die-casting using molds to produce the desired airfoil configuration of a leading and trailing edge separated by a thicker midsection therebetween. This configuration, shown in Figures 10, 11 and 12, greatly facilitates the ingress of air into the compressor inlet area, and may be cast using well known die-casting techniques.

Figure 13 shows an adaptation of the turbocharger illustrated in Figure 2 wherein differing geometries of wall inserts 126 may be substituted one for the other for use with corresponding compressor rotors. Referring to Figure 13, wall insert 126a provides a more restrictive air flow into the turbocharger while wall insert 126b provides for a larger compressor rotor and greater air flow into the turbocharger. It will be now appreciated that modification of the design may be accomplished by merely fitting differing wall inserts 126 to a standard compressor housing unit 24. Thus, several different turbochargers, having different flow capabilities, may be produced using a standard compressor housing unit 24 by selecting one of any number of possible geometries for wall insert 126 with corresponding compressor wheels. This feature is significant in that wall insert 126 is the simpler component of the compressor housing unit.

Moreover, a compressor bearing support cylinder is cast concentric with the inlet port and supported therein by a plurality of vanes extending from the inner wall of the inlet port. The vanes are formed with a leading and trailing edge separated by a thicker midsection. This is accomplished through the use of molds having a parting line substantially at the thicker cross sectional area to permit die-casting of the compressor housing.

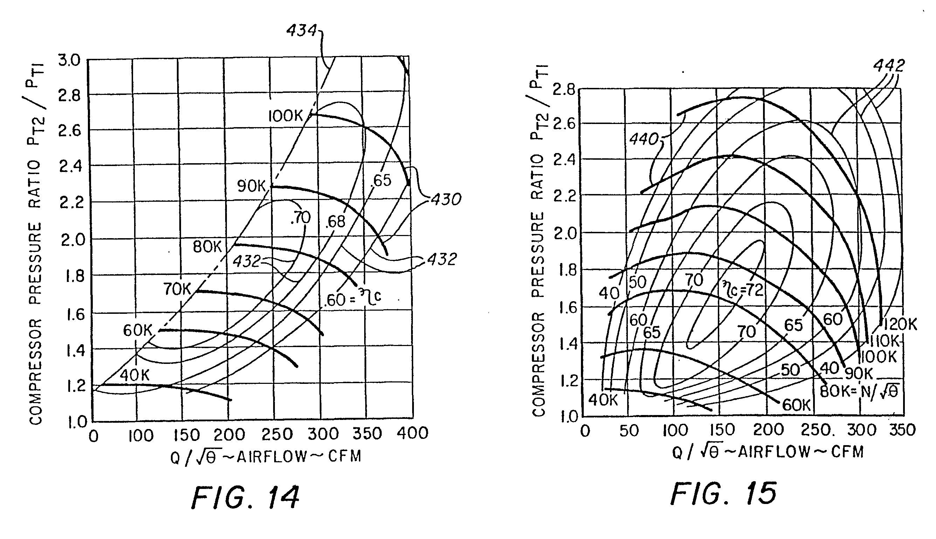

A critical feature of the present turbocharger is its capability of performing over an extremely wide range of compressor speeds and flows without experiencing a "surge line" commonly encountered in conventional turbochargers. This highly significant feature is demonstrated by reference to the performance graphs, known as "compressor maps", illustrated in Figures 14 and 15. Figure 14 illustrates a typical compressor map for a conventional turbocharger, while Figure 15 illustrates a compressor map for the turbocharger of the present invention. These maps plot air flow in cubic feet = 0.028 cubic meters per minute versus the ratio of discharge pressure to inlet pressure for the turbocharger compressor.

Referring to Figure 14, constant compressor speed lines 430 and isentropic efficiency lines 432 are shown. A surge line 434 identifies the performance points to the left of which the turbocharger compressor cannot operate to produce a uniform output of air. While the components of the turbocharger may be modified such that the surge line is shifted toward the vertical axis to provide for stable operation at lower turbocharger speeds, and thus lower engine speeds, such a shifting of the operating characteristics of the turbocharger reduces the high speed capabilities of the unit. Therefore, turbochargers have heretofore been relegated to providing increased performance at only higher engine speeds.

The present turbocharger is capable of producing a uniform output at very low turbocharger air flows and effectively eliminates the surge line limitation encountered in conventional turbochargers. Referring to Figure 15, compressor performance map for the present turbocharger is illustrated including constant compressor speed lines 440 and efficiency lines 442.

As can be appreciated by viewing the compressor map illustrated in Figure 15, the compressor of the present turbocharger continues to operate with no irregularity in compressor output to very low air flow values. Effectively, the present turbocharger does not experience a "surge line" corresponding to that illustrated in the compressor map of Figure 14.

Referring to Figures 14 and 15, the breadth of the operating range of the conventional turbocharger may be compared with that of the present turbocharger. Referring specifically to Figure 14, at a compressor pressure ratio of 1.9, the air flow range varies from a high 9.9 (350) at an efficiency of 60% to a low of 5.7 cubic meters (200 cubic feet) per minute at the surge line. Therefore, this ratio of high to low flow rate (9.9 divided by 5.7) is 1.75. Referring to Figure 15, at a pressure ratio of 1.9, the present turbocharger operates from a flow rate of 7.8 (275) at a 60% efficiency to a low of 1.7 cubic meters (60 cubic feet) per minute without encountering a surge line. The ratio of the high to low flow rate (7.8 divided by 1.7) is 4.58, an increase of over two and one-half that of the conventional turbocharger.

This achievement is highly significant in that the turbocharger can be effectively used to improve performance both at lower engine speeds as well as at higher engine speeds. This development becomes even more significant when coupled with the feature for providing a constant compressor speed for varying engine speeds or constant boost at varying engine speeds in that a higher desired pressure ratio may be attained at low engine rpm's without surge or turbulence problems normally experienced at the lower compressor flows in conventional turbochargers.

This significant advancement provided by the present turbocharger is primarily attributable to the compressor air inlet configuration in conjunction with advanced radial flow compressor technology – such as backward swept blading. As has been described, bearing support cylinder 60 is supported within tubular inlet port 40 by a plurality of struts 62 extending from the inside wall of inlet port 40 to the bearing support cylinder 60. In one embodiment, three struts extend from the inside wall of the inlet port to the bearing support cylinder to position the cylinder concentrically within the compressor air inlet. As a result, the inlet is divided into more than one inlet channel. Additionally, these channels are proportionately long in the flow direction compared to any width dimension. Further, the struts have a contour including a leading and trailing edge narrower than an intermediate section of the strut. As is also shown in Figure 2, the inside wall portion of inlet port 40 has a converging diameter from the inlet end to the area adjacent compressor rotor 172.

This structure stabilizes the back flow conditions normally encountered at low compressor flows. By stabilizing the back flow conditions, the compressor is able to continue to function to provide a steady state flow of air at much lower compressor flows than heretofore possible in conventional turbochargers.

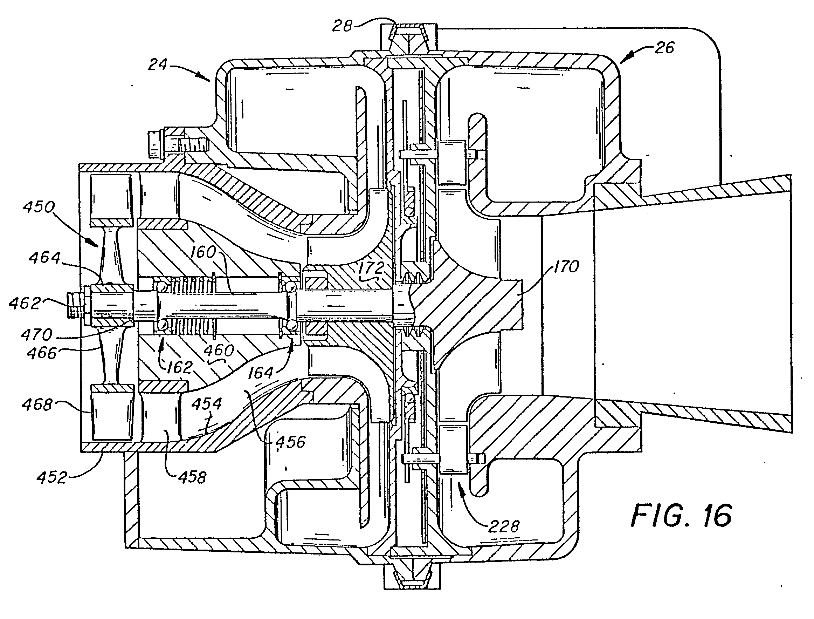

Figure 16 illustrates a vertical section of an alternative embodiment of the turbocharger illustrated in Figures 1–13. The turbocharger of Figure 16 is identical to the turbocharger illustrated in Figures 1–13 with the exception that an axial stage compressor rotor 450 is mounted in the compressor inlet port. Because of the substantial identity between many components in the alternative embodiment illustrated in Figure 16 and the turbocharger illustrated in Figures 1–13, like or corresponding parts are identified by the same numeral.

In the embodiment of Figure 16, the compressor inlet port is modified to include a larger diameter inlet port 452 having an inner wall 454 defining the inlet channels 456 to radial compressor rotor 172. A plurality of stators 458 extend from inner wall 454 of inlet port 452 to support bearing support 460. An axial stage compressor rotor 450 is mounted on the end of shaft 160 on the side of bearing assemblies 162 and 164 opposite compressor rotor 172 and is retained in position by an appropriate nut 462. The compressor rotor includes a hub 464 and a plurality of struts 466 attached between hub 464 and a plurality of struts 466 attached between hub 464 and struts 468. Hub 464 engages a step 470 on shaft 160 and is positioned between step 470 and nut 462.

As can be appreciated from viewing Figure 16, air entering inlet port 452 is compressed by the axial stage compressor and is carried through channels 456 to radial compressor rotor 172. The use of a two-stage compressor is significant in that a broader operating range may be accomplished with the use of a two-stage compressor as compared to the range possible from a single stage compressor. For example, in use of a two-stage compressor, the first stage may be used to achieve a pressure ratio of inlet pressure to discharge pressure of 1.5 to 1.6 while the second stage may be used to achieve a pressure ratio of 3.0 to 3.5. These combined pressure ratios effectively produce a pressure ratio on the order of 4.5 to 5.6. While such pressure ratios may be achieved in a single stage, the higher compressor speed required to produce such pressure ratios would dictate the use of higher quality and more expensive compressor and turbine components as well as producing significant flow range restraints. In the present arrangement, the two-stage unit accomplishes the higher pressure ratios without this additional expense or disadvantage. Moreover, in the present arrangement, the axial stage compressor is mounted on the opposite side of the bearing support structure from the radial compressor and turbine rotors thereby providing balance to the system and no particular ill effects.

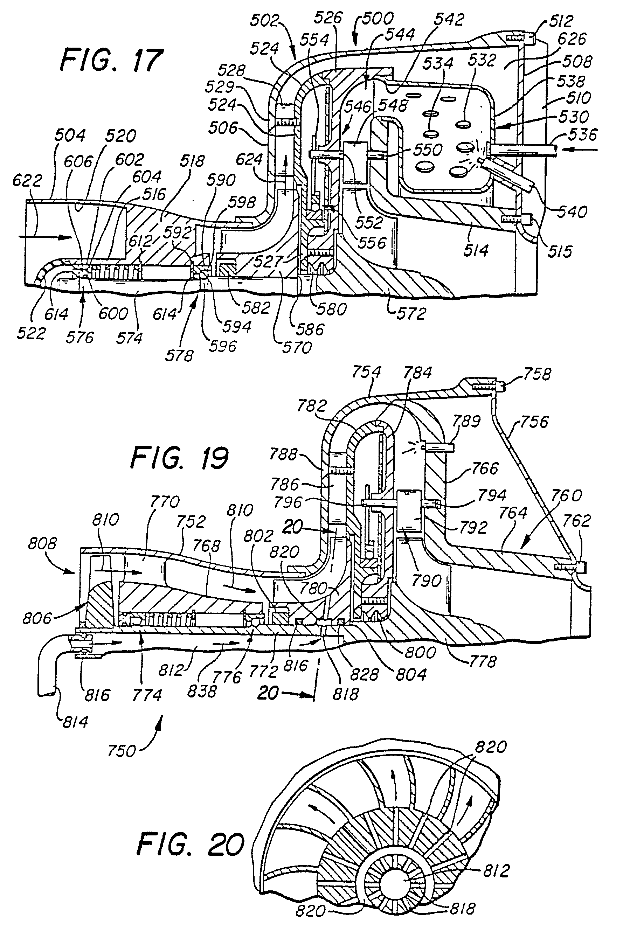

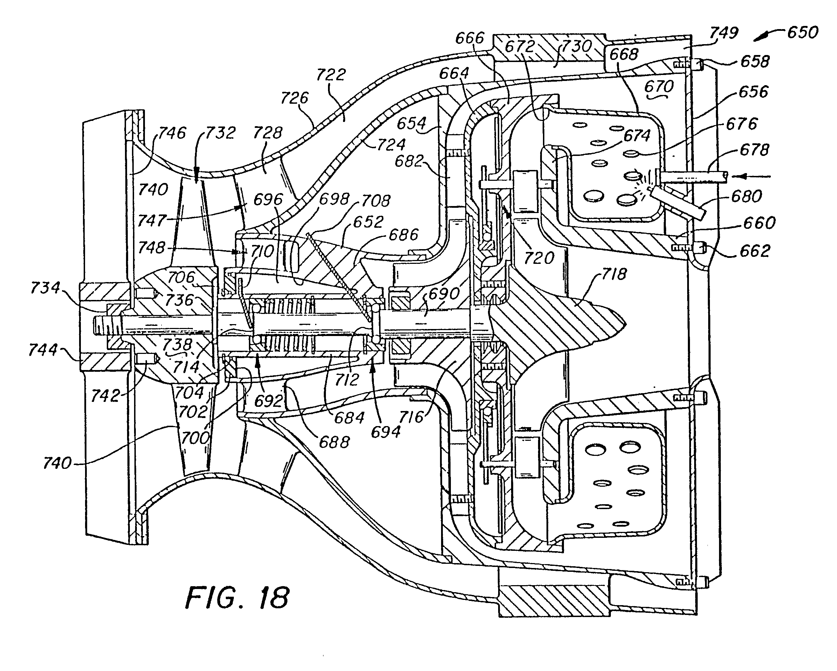

The present turbocharger configuration described with respect to Figures 1–13 may be readily converted into an effective turbojet or turbofan engine as illustrated in Figures 17–21. While these embodiments are illustrated by a vertical section of only the upper half of apparatus, it will be understood that the lower half of the unit is substantially identical to the upper half shown.

A turbojet 500 is illustrated in Figure 17. Turbojet 500 includes an outer housing 502 consisting of a tubular inlet nozzle 504, main housing 506 and combustion chamber backwall plate 508. Backwall plate 508 includes an integral stiffener 510 and is attached to main housing 506 by bolts 512. A turbine exhaust nozzle 514 is supported within main housing 506 by attachment to the end of backwall plate 508 opposite main housing 506 by bolts 515.

A bearing support cylinder 516 is mounted within tubular inlet nozzle 504 by a plurality of struts 518 extending from the inside wall surface 520 of inlet nozzle 504. This arrangement is similar to that illustrated in Figures 1–13 with respect to the bearing support cylinder 60 and its attachment within inlet port 40 of turbocharger 20. A cap 522 is mounted over the end of bearing support cylinder 516. Referring still to Figure 17, a compressor backwall 524 and turbine backwall 526 are positioned within main housing 506 and are attached one to the other by suitable screws 527. In the embodiment illustrated in Figure 17, a fixed stator vane 528 is mounted between main housing 506 and compressor backwall 524 by suitable screws 529. A combustion liner 530 is mounted between turbine backwall 526 and a transversely extending portion of turbine exhaust nozzle 514. Combustion liner 530 may be of a conventional design including a circumferential chamber having a plurality of ports formed therein. The liner includes ports 532 for primary air combustion and ports 534 for dilution air according to known practice. Fuel is supplied to the combustion chamber by fuel spray nozzles 536 extending through combustion chamber backwall plate 508 and upstream wall 539 of the combustion liner. An ignitor 540 is received within combustion liner 530 through upstream wall 538 and combustion chamber backwall plate 508. Combustion liner 530 has a mouth 542 leading to a turbine inlet area 544 formed between turbine backwall 526 and the transversely extending portion of turbine exhaust nozzle 514.

A turbine inlet area control structure 546 is used in turbojet 500 illustrated in Figure 17 and is identical to turbine inlet area control structure 228 illustrated and described with respect to the turbocharger of Figures 1–13. More specifically, turbine inlet area control structure 546 includes movable nozzle vanes 548 positioned circumferentially about the nozzle area and rotatable to vary velocity and angle of flow of combustion gas through nozzle inlet 544. Vanes 548 include trunnions 550 and 552 extending from opposite sides thereof. Trunnion 550 extends through the transversely extending portion of turbine exhaust nozzle 514, and trunnion 552 extends through turbine backwall 526 and is attached to an actuation lever 554. The end of actuation lever 554 is engaged with the outer race of a ball bearing assembly 556, with the inner race of the ball bearing assembly being secured to compressor backwall 524 as discussed with respect to turbocharger 20 illustrated in Figures 1–13. Likewise, the operation of actuation lever 554 is identical to that discussed with respect to turbocharger 20 of Figures 1–13 to control the angular orientation of nozzle vanes 548 as desired.

Bearing support cylinder 516 is supported concentrically within inlet nozzle 504, as previously described, by struts 518. A compressor rotor 570 and a turbine rotor 572 are supported on a shaft 574 mounted for rotation in bearing support cylinder 516 by two ball bearing assemblies 576 and 578. Turbine rotor 572 is mounted at one end of shaft 574 and radial flow compressor rotor 570 is mounted intermediate of turbine rotor 572 and bearing assemblies 576 and 578. Shaft 574 passes through turbine backwall 526 and through compressor backwall 524 wherein a labyrinth seal 580 formed around shaft 574 provides a seal between the compressor and turbine rotors.

Turbine rotors 572 is fixedly attached to shaft 574, such as by welding, and compressor rotor 570 is retained in position on shaft 574 by a retainer nut 582. Nut 582 is of the same arrangement as nut 180 described with respect to the embodiments illustrated in Figures 1–13. Compressor rotor 570 is positioned between nut 582 and a step 586 in shaft 574.

Referring still to Figure 17, a bearing ring 590 is fitted within the end of cylinder 516 adjacent compressor rotor 570 and is prevented from moving within cylinder 516 by a retaining ring 592 attached to cylinder 516. Outer raceway 594 of bearing assembly 578 is formed in ring 590, the inner raceway 596 being formed integrally in shaft 574. Balls 598 are received between inner and outer raceways to form bearing assembly 578.

A bearing support cylinder 516 is mounted within inlet nozzle 504 by a plurality of struts 518 extending from the inside wall surface 520 of inlet nozzle 504. This arrangement is similar to that illustrated in Figures 1–13 with respect to bearing support cylinder 60 and its attachment within inlet port 40 of turbocharger 20. A cap 522 is mounted over the end of bearing support cylinder 516.

Referring still to Figure 17, a compressor backwall 524 and turbine backwall 526 are positioned within compressor-burner housing 506 and are attached one to the other by screws 527.

Bearing assembly 576 includes inner raceway 600 formed integrally in shaft 574 and an outer ring 602 slidable within cylinder 516 with an outer raceway 604 formed therein for receiving balls 606. A compression spring 610 is engaged between ring 602 and a retaining ring 612 fixed within cylinder 516 and biases ring 602 outwardly to fix the position of balls 606 and 598 in bearing assemblies 576 and 578, respectively, thereby fixing the position of shaft 574.

The structure of the bearing assemblies for the turbojet 500 is identical to that arrangement used for turbocharger 20 illustrated in Figures 1–13. Therefore, the assembly and operation of the bearing assemblies is identical to that described earlier with respect to turbocharger 20. Likewise, the means of lubricating the bearing assemblies, wicks in contact with inclined ramps 614, is identical to that illustrated with respect to turbocharger 20 illustrated and described in Figures 1–13.

In operation of the turbojet illustrated in Figure 17, air enters tubular air inlet port at its inlet 620 following the air path indicated by arrow 622. This air is compressed by compressor rotor 570 and is discharged radially therefrom along the air path indicated by arrow 624. This compressed air is delivered into a combustion chamber area 626 and into combustion liner 530 through ports 532 and 534. Air is mixed with fuel, injected into combustion liner 530 through nozzles 536. A stoichiometric mixture is obtained and the mixture is ignited within combustion liner 530 through nozzles 536. A stoichiometric mixture is obtained and the mixture is ignited within combustion liner 530 by ignitors 540. Cooling air is delivered into combustion liner 530 through ports 534 to cool the exhaust gases from combustion prior to their entry into turbine inlet area 544. These gases engage turbine rotor 572 to drive the rotor and the compressor rotor attached thereto by way of shaft 574. The combustion gases are thereafter discharged through nozzle 514 to the outer atmosphere, producing the thrust provided by the turbojet.

As can be appreciated by review of the turbojet illustrated in Figures 17, the system is compact in size and has a minimum of components. Further, the bearing assemblies on which the turbine and compressor rotor shaft rotate are positioned away from turbine rotor 572 and the extremely hot combustion gases delivered thereto from combustion liner 530.

Moreover, the serious problems encountered as a result of the extremely high temperatures such bearing structures are normally subjected to are completely eliminated by the unique new bearing arrangement. Because the bearings are removed from the extremely high temperatures associated with the combustion gases used to drive the turbine and indeed even insulated from these high temperatures by the compressor rotor and compressor backwall and turbine backwall, limited lubrication is sufficient for the successful operation of the unit. This eliminates the need for a constant flow of lubrication to the bearings as well as the numerous components necessary to provide such lubrication that would have to be driven by the rotating shaft.

Figure 18 illustrates a turbofan 650. The structure of turbofan 650 is substantially identical to the structure of turbojet 500 illustrated in Figure 17 with the exception that a bypass air channel is provided in addition to the primary air channel and an axial stage compressor is provided upstream of the radial compressor.

Referring to Figure 18, turbofan 650 includes an inlet nozzle 652, a main housing 654 and a combustion chamber backwall 656. Combustion chamber backwall 656 is attached to main housing 654 by appropriate bolts 658. A turbine exhaust nozzle 660 is attached by bolts 662 to combustion backwall 656. A compressor backwall 664 and a turbine backwall 666 are positioned within main housing 654, and a combustion liner 668 is mounted within a combustion chamber 670 with a mouth 672 opening between turbine backwall 666 and a laterally extending portion 674 of turbine exhaust nozzle 660. Combustion liner 668 is formed with a plurality of ports 676. A fuel injection unit 678 is received through combustion backwall 656 into liner 668. An ignitor 680 is also received within liner 668 for igniting fuel air mixtures in operation of the turbofan.

A stator vane 682 is mounted between main housing 654 and compressor backwall 664 by suitable screws. A bearing support cylinder 684 is mounted within inlet nozzle 652 by a plurality of struts 686. A plurality of stator vanes 688 are also mounted in the inlet nozzle 652 for cooperation with the axial stage compressor as will be discussed hereinafter in greater detail.

Shaft 690 is supported within bearing support cylinder 684 by bearing assemblies 692 and 694. Bearing assemblies 692 and 694 are identical to those described with respect to turbojet of Figure 17 and the turbocharger illustrated in Figures 1–13, and reference is hereby made to the earlier description thereof. An oil chamber 696 is formed between inner wall 698 of inlet nozzle 652 and bearing support cylinder 684. An appropriate ring 700 with O-rings 702 and 704 are positioned in the mouth of chamber 696 and retained in position by ring 706. Wicks 708 and 710 communicate through oil chamber 696 to provide oil to inclined ramps 712 and 714, respectively, thereby providing lubrication to bearing assemblies 692 and 694 as described earlier with respect to the embodiments of Figures 1–13 and Figure 17.

A radial compressor rotor 716 and turbine rotor 718 are mounted on shaft 690 and a turbine inlet control structure 720, identical to that discussed with respect to the embodiments of Figures 1–13 and Figure 17, is incorporated to control the velocity and angle of combustion gases to turbine rotor 718.

A bypass flow channel 722 is formed between an inner bypass wall 724 and outer bypass wall 726. Outer bypass wall 726 is attached to inner bypass wall 724 by a plurality of stator vanes 728 positioned therebetween. Outer bypass wall 726 is positioned from main housing 654 by a plurality of struts 730 spaced circumferentially around housing 654.

An axial stage compressor rotor 732 is attached to shaft 690 by an appropriate nut 734 engaging rotor 732 against a retaining ring 736. Rotor 732 includes a hut 738 and a plurality of vanes 740 extending radially therefrom. A plurality of cylindrical armatures 742 are embedded within hub 738 of rotor 732 and cooperate with a stationary field winding 744 mounted adjacent thereto from outer bypass wall 726 by struts 746 to produce electric current.

The operation of the turbofan illustrated in Figure 18 is substantially similar to that of the turbojet illustrated in Figure 17 with the exception that air entering the inlet of the turbofan at axial stage compressor rotor 732 is divided into a bypass flow indicated by arrow 747 and a primary flow indicated by arrow 748. Bypass air is compressed and discharged through a bypass nozzle 749 producing thrust from the turbofan. Primary air is directed along the path indicated by arrow 748 and is compressed by axial stage compressor rotor 732 and radial compressor rotor 716 prior to being mixed with fuel in combustion liner 668 and ignited therein. The ignited gases move past the turbine inlet area control structure and against turbine rotor 718 to drive the turbine rotor, as well as the axial stage compressor rotor 732 and radial compressor rotor 716. Exhaust gases from turbine rotor 718 are discharged through turbine exhaust nozzle 660 producing additional thrust to the turbofan.

The turbine inlet control structure 720 is identical to that illustrated and described with respect to turbocharger 20 illustrated in Figures 1–13 and turbojet 500 of Figure 17. This control structure operates to control both the velocity and angle of combustion gases directed against turbine rotor 718 from combustion liner 668. It will be understood that the monitoring structure illustrated in relate to turbocharger 20 may be directly applied to the turbojet and turbofan of Figures 17 and 18, respectively. Thus, the speed of the turbine and associated compressors may be monitored and the turbine nozzle inlet are varied in accordance with this speed or in accordance with other engine parameters as desired.

During rotation of axial stage compressor rotor 732, armatures 742 are rotated relative to windlings 744, causing the generation of electricity therefrom. This electricity may be used to operate various engine or aircraft systems as desired and provides a very economical and compact energy package for the system.

Referring now to Figures 19 and 20, an alternative embodiment of the turbojet illustrated in Figure 17 is shown and identified generally by the numeral 750. Turbojet 750 includes an inlet cylinder 752 joined to a main housing 754 with a back plate 756 attached to main housing 754 by a plurality of bolts 758. A turbine exhaust nozzle 760 is attached to the end of back plate 756 opposite main housing 754 by appropriate bolts 762. Turbine exhaust nozzle includes an exhaust cylinder 764 and a laterally extending portion 766 formed to join main housing 754.

A bearing support cylinder 768 is supported from inlet cylinder 752 by a plurality of stators 770. A shaft 772 is supported within cylinder 768 by bearing assemblies 774 and 776. Bearing assemblies 774 and 776 are identical in structure and operation to bearing assemblies 576 and 578 illustrated with respect to the embodiment of Figure 17. A turbine rotor 778 is formed integrally with shaft 772 and a compressor rotor 780 is mounted on shaft 772 intermediate of turbine rotor 778 and bearing assemblies 774 and 776.

A compressor backwall 782 and a turbine backwall 784 are mounted within main housing 754. A plurality of stator vanes 786 are mounted between main housing 754 and compressor backwall 782 by screws 788. A suitable ignitor 789 is mounted within lateral extending portion 766 of turbine nozzle 760 into the chamber formed between that wall and turbine backwall 784.

A turbine nozzle inlet area control structure 790 including a movable vane 792 supported for rotation on trunnions 794 and 796 within transverse wall 766 and turbine backwall 784, respectively, is provided. This turbine nozzle inlet area control structure 790 is identical to that structure disclosed and illustrated in the embodiment of turbocharger 20 of Figures 1–13 and turbojet 500 of Figure 17. A labyrinth seal 800 is formed within turbine backwall 784 to provide an effective seal between the turbine and compressor areas. Compressor rotor 780 is mounted on shaft 772 by nut 802 engaging rotor 780 against a step 804 in shaft 772.

An axial compressor 806 rotates with shaft 772 to cooperate with stators 770 to compress air directed into compressor inlet 808 formed by inlet cylinder 752. Compressed air is directed along a path indicated by arrow 810. In the embodiment illustrated in Figures 19 and 20, shaft 772 is formed with an axial bore 812 therein. A fuel supply conduit 814 is connected with bore 812 to provide a supply of fuel within the axial bore. An appropriate seal 816 is positioned between fuel supply conduit 814 and the surface of bore 812 to prevent loss of fuel at the point of connection of the conduit and the shaft.

A plurality of radial ports 818 are formed through shaft 772 to communicate between bore 812 and an annular groove 820 formed in compressor rotor 780. A plurality of radial ports 822 communicate from groove 820 through compressor rotor 780. Suitable seal means such as O-rings 826 and 828 are mounted in annular grooves within rotor 780 to prevent leakage of fuel at the point of connection between the rotor and shaft 772.

In operation of the turbojet illustrated in Figures 19 and 20, fuel is supplied to bore 812 of shaft 772 through fuel supply conduit 814. A fuel supply path is provided between bore 812 and the air flow path indicated by arrows 810 (Figure 19) through ports 818, groove 820 and ports 822. This fuel flow path is indicated by arrows 838. As compressor rotor 780 is rotated, fuel is carried by centrifugal force from bore 812 through this fuel path into the air path indicated by arrows 810. Simultaneously therewith, air is drawn into inlet port 808 by axial stage compressor 806 and is delivered in a compressed state along the air path. This air is further compressed by radial compressor rotor 780 and mixed with the fuel downstream of the compressor rotor. The fuel is highly atomized as a result of the action of the compressor rotor blades on the fuel as it is ejected from the ports 822 through the compressor rotor. This atomized fuel when mixed with the compressed air delivered into the turbojet is directed along the air path and is ignited by ignitor 836 upstream of turbine rotor 778. The exhaust gases resulting from combustion move past the vanes of turbine rotor 778 to drive the rotor in a conventional manner. These exhaust gases are then discharged through nozzle 760 to provide thrust from the turbojet. It will be understood that the combustion temperature is considerably greater with this system of combustion and would require materials capable of withstanding the greater temperatures.

The system of Figures 18 and 19 eliminates many of the components heretofore required in conventional turbojets. The unique fuel supply system illustrated in Figures 18 and 19 eliminates the need for a fuel pump and all associated hardware. The conventional fuel pump is replaced by a fuel system which automatically discharges fuel in an atomized state by projecting the fuel through a bore in the compressor rotor shaft and through ports in the compressor rotor itself into the air stream compressed by the rotor. The system of Figures 18 and 19 further provides a two-stage compression arrangement, wherein an axial stage compressor is applied upstream of the radial or centrifugal compressor. This arrangement provides additional balance to the system by providing the axial stage compressor on the side of the bearing structures opposite that of the radial compressor.

Further, this arrangement positions the bearing structure remote from the turbine rotor and combustion chamber immediately upstream of the turbine rotor. This arrangement insulates the bearing structure from the extreme temperatures experienced in this area of the system. Therefore, no oil system is required. Moreover, the units are adaptable to very small turbojets or turbofans.

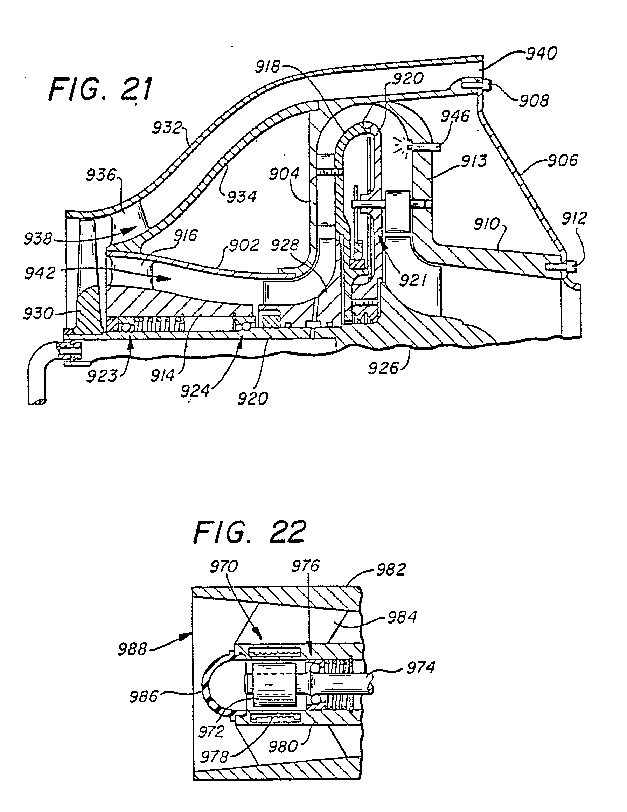

Figure 21 shows an alternative embodiment of the turbojet illustrated in Figure 20 to produce a turbofan 900. The structure of turbofan 900 is substantially identical to turbojet 750 illustrated in Figure 20, with the exception that a bypass air channel is provided in addition to the primary air channel. The turbofan includes an inlet cylinder 902 joined to a main body 904 and a backwall 906 attached to main housing 904 by bolts 908. A turbine exhaust nozzle 910 is supported from backwall 906 by bolts 912 with a laterally extending portion 913 of nozzle 910 in engagement with main housing 904. A bearing support cylinder 914 is supported from inlet cylinder 902 by a plurality of struts 916. A compressor backwall 918 and turbine backwall 920 are supported within main housing 904. A turbine inlet area control structure 921 identical to that disclosed with respect to structure 790 of the turbojet of Figure 26 is provided. A shaft 922 is supported for rotation within bearing support cylinder 914 by bearing assemblies 923 and 924. These bearing assemblies are identical to those disclosed with respect to the turbojet illustrated and described in Figure 19. A turbine rotor 926 is mounted to one end of shaft 922 and a compressor rotor 928 is mounted intermediate of turbine rotor 926 and bearing assemblies 923 and 924.

In the embodiment illustrated in Figure 21, an axial compressor rotor 930 is mounted to the end of shaft 922 and directs air along a primary flow path within inlet cylinder 902 and a secondary flow path formed between the secondary flow wall 932 and inner secondary flow wall 934. Outer secondary flow wall 932 is supported from inner wall 934 by a plurality of stators 936. Air directed through the secondary flow path, indicated by arrow 938, is compressed by the action of compressor rotor 928 and stators 936 and is exhausted through exhaust nozzle 940 to produce thrust from the turbojet. Air directed along the primary flow path, indicated by arrow 942, is compressed by rotor 928 and mixed with fuel supplied into the air stream in an identical way as described with respect to the embodiment of Figure 19 and ignited by an ignitor 946. The combustion gases are directed through turbine inlet area control structure 921 to drive turbine rotor 926 and compressor rotors 930 and 928. Air exhausted past turbine rotor 926 through turbine exhaust nozzle 910 provides further thrust from the turbofan.

Figure 22 illustrates a further embodiment of the systems illustrated in the prior figures wherein an electrical generator 970 is mounted within the compressor inlet nozzle. Referring now to Figure 22, electrical generator 970 includes an armature 972 mounted on the end of compressor and turbine shaft 974. As is seen in Figure 20, shaft 974 is supported by bearing assembly 976 and a second bearing assembly (not shown) identical to the bearing assemblies shown with respect to the turbocharger of Figures 1–13 and the turbojets of Figures 17–21. A field winding 978 is mounted within bearing support housing 980, which is in turn concentrically mounted within compressor inlet nozzle 982 by vanes 984 in the same manner discussed earlier with respect to both the turbocharger and turbojet and turbofan embodiments. A cap 986 is mounted on the end of bearing supports housing 980.

In operation of the generator, the armature 972 rotates with shaft 974 within field winding 978 to produce an electrical current in the well known manner. Electric current so produced is directed by way of leads (not shown) from field winding 978 to any point in the system requiring electrical power. Thus, with respect to the present turbocharger, the generator may be used to supply electric current for any components in an automobile or other equipment requiring electrical power. With respect to application disclosed in Figure 22 to the turbojets of Figures 17–21, electrical energy may be used for guidance systems or other components requiring electrical power.

Thus, the arrangement disclosed in Figure 22 provides a very simple and straightforward electric generator driven directly by the rotation of the compressor and turbine shaft. Moreover, the location of the generator provides a very compact system, light in weight and not interfering with the operation of the system from which it derives is power.

Therefore, the present embodiment also provides a turbojet and turbofan arrangement wherein the combustion chamber is removed from the bearing assemblies used to support the compressor and turbine shaft.

## Claims

1. Turbocharger for use with an internal combustion engine or turbojet, having a shaft (160) supported in a housing, a turbine rotor (170) attached to said shaft (160) for receiving driving gases, a compressor rotor (172) fitted on said shaft (160) for rotation with said turbine rotor (170), said compressor rotor (172) supplying air to the engine from an air inlet (50) of said housing, and bearing means (162, 164) for rotatively supporting said shaft (160) such that said compressor and turbine rotors (172, 170) are overhung to one side of said bearing means with said bearing means (162, 164) positioned such that said turbine rotor (170) is separated from said bearing means by said compressor rotor (172), wherein a plurality of nozzle vanes (234) is spaced about said turbine rotor (170) and in the inlet (230) of said turbine rotor (170) through which gas is fed to said turbine rotor (170) and wherein a control means (246, 240) is provided for rotating said nozzle vanes (234) to vary the flow of gas to the turbine rotor (170), characterized in that an air space gap (247) is provided intermediate of said compressor rotor (172) and said turbine rotor (170) which is defined in axial direction of said shaft (160) by a compressor housing backwall (100) and a turbine housing backwall (102) and in which air space gap (247) said control means (246, 240) is situated.

2. Turbocharger or turbojet according to Claim 1, characterized by lubrication means (222, 224) for providing only limited lubrication to said bearing means (162, 164).

3. Turbocharger or turbojet according to Claim 1 or 2, characterized by lubrication means (222, 224) for supplying a lubricant mist to said bearing means (162, 164) to provide lubrication thereto.

4. Turbocharger or turbojet according to Claims 2 or 3, characterized in that said lubrication means comprises an inclined circumferential ramp means (226) formed on said shaft (160) and angled toward said bearing means, and lubricant means (222, 224) for supplying a lubricant to said inclined ramp means such that said lubricant is carried by centrifugal force to said bearing means during rotation of said shaft.

5. Turbocharger or turbojet according to Claim 4, characterized in that said lubricant means comprises a wick (224) having one end in contact with said lubricant and the opposite end in contact with said inclined ramp (226).

6. Turbocharger or turbojet according to one of Claims 1 to 5, characterized in that said control means comprises a control ring (246) movable angularly relative to said turbine rotor (170), an actuation lever (240) rotatable with each of said nozzle vane (234), and having one end engaged in said control ring (246), a control rod (86) attached to one of said actuation levers (240) and means (80) for selectively moving said control rod (86) to angularly rotate said control ring (246) thereby rotating said actuation levers (240) and the nozzle vanes (234) attached thereto.

7. Turbocharger or turbojet according to Claim 6, characterized in that said control ring (246) comprises an outer ring (252) having apertures (244) therein for receiving said one end (242) of each said actuation levers (240), an inner ring (250), and a plurality of balls (254) assembled between said inner and outer rings (250, 252) to permit annular rotation of said outer ring (252) relative to said inner ring (250).

8. Turbocharger or turbojet according to one of Claims 1 to 6, characterized in that said bearing means (162, 164) comprises first and second inner raceways (206, 210) formed in said shaft, a first outer raceway ring (200) fixed to a bearing housing (60) and positioned to correspond to said first inner raceways (206) for receiving a plurality of balls (208) therebetween, a second outer raceway ring (212) slidable relative to said first outer raceway ring (200) and positioned adjacent said second inner raceway (210) for receiving a plurality of balls (216) therebetween, and spring means (218) for biasing said second outer raceway ring (212) away from said first outer raceway ring (200) to position the balls (208, 216) between said first outer raceway ring (200) and first inner raceway (206) and said second outer raceway ring (212) and second inner raceway (210) thereby positioning said shaft (160) relative to said housing.

9. Turbocharger or turbojet according to Claim 8, characterized by a second inclined circumferential ramp (226) formed on said shaft (160) and angled toward the balls (216) positioned between said second outer raceway ring (212) and said second inner raceway (214), and by lubricant means for supplying a lubricant to said second inclined ramp (226) through a wick (222) having one end in contact with said lubricant and the opposite end in contact with the inclined ramp (226) such that said lubricant is applied to the ramp (226) and carried by centrifugal force to the balls (216) during rotation of said shaft (160).

10. Turbocharger or turbojet according to one of Claims 1 to 9, characterized in that said bearing means (162, 164) is located in a concentrically positioned cylindrical module (60) mounted within said air inlet (50) upstream of the compressor rotor (172) and supported from the inlet walls by struts (62) extending from the inlet wall (64) to the cylindrical module (60), said struts (62) dividing the air inlet (50) into more than one inlet passage.

11. Turbocharger or turbojet according to Claim 10, characterized in that said air inlet (50) has a converging inner wall (110, 131) from the mouth of the air inlet (50) to the compressor rotor (172).

12. Turbocharger or turbojet according to Claims 10 or 11, characterized in that said air inlet (50) diameter is shorter than the length of said air inlet (50).

13. Turbocharger or turbojet according to one of Claims 10 to 12, characterized in that said struts (62) are formed with a leading edge (330) and a trailing edge (332) thinner than the portion of the strut (62) intermediate of the leading and trailing edges (330, 332).

14. Turbocharger or turbojet according to Claim 13, characterized in that three struts (62) extend substantially radially from said cylindrical module (60) to the side wall of the air inlet (50) dividing said air inlet (50) into three inlet passages.

15. Turbocharger or turbojet according to one of Claims 1 to 14, characterized by a second compressor rotor (450) mounted on said shaft (160) upstream of said compressor rotor (172).

16. Turbocharger or turbojet according to Claim 15, characterized in that said second compressor rotor (450) is mounted on said shaft (160) on the side of said bearing means (162, 164) opposite said compressor and turbine rotors (172, 170).

17. Turbocharger or turbojet according to one of Claims 1 to 16, characterized by a retaining sleeve (180), having a bore (180a) therethrough for mounting said sleeve (180) onto said shaft (160) adjacent the compressor rotor (172), said sleeve bore (180a) having a diameter to form an interference fit over the shaft (160) such that the sleeve (180) alone prevents the compressor rotor (172) from movement off the shaft (160) in the direction of said sleeve (180).

18. Turbocharger or turbojet according to Claim 17, characterized by spring means (422) positioned between said retaining sleeve (180) and the compressor rotor (172) for applying a force between the compressor rotor (172) and said retaining sleeve (180) for maintaining an axial force on the compressor rotor (172).

19. Turbocharger or turbojet according to Claims 17 or 18, characterized by said sleeve (180) being formed with threads around the outer circumference to permit engagement of said sleeve (180) for removal thereof.

20. Turbocharger or turbojet according to Claim 19, characterized by said sleeve (180) having an outer diameter sized to be received within a bore (182) formed in the compressor rotor (172) concentrically with the aperture in the rotor (172) such that the threads on said sleeve (180) may be engaged for extracting said sleeve (180) from the shaft (160).

21. Turbocharger or turbojet, according to one of Claims 17 to 20, characterized by the shaft (160) being hardened to facilitate retention of said sleeve (180) thereon but to permit removal of said sleeve (180) without damage to the shaft (160).

## Patentansprüche

1. Turbolader zur Verwendung mit einer Verbrennungskraftmaschine oder Strahlturbine, mit einer in einem Gehäuse gehalterten Welle (160), einem an der Welle (160) angebrachten Turbinenrotor (170) zum Empfangen von antreibenden Gasen, einem zur Drehung mit dem Turbinenrotor (170) auf die Welle (160) aufgepaßten Kompressorrotor (172), der von einem Lufteinlaß (50) des Gehäuses der Maschine Luft zuführt, und mit Lagermitteln (162, 164) für die drehbare Halterung der Welle (160), so daß Kompressor- und Turbinenrotor (172, 170) zu einer Seite der Lagermittel überhängend angeordnet sind, wobei die Lagermittel (162, 164) derart positioniert sind, daß der Turbinenrotor (170) durch den Kompressorrotor (172) von den Lagermitteln getrennt ist, wobei im Abstand um den Turbinenrotor (170) und im Einlaß (230) des Turbinenrotors (170), durch den dem Turbinenrotor (170) Gas zugeführt wird, mehrere Turbinenschaufeln (234) angeordnet sind und wobei Steuermittel (246, 240) zur Drehung der Turbinenschaufeln (234) für die Veränderung des Gasstroms zum Turbinenrotor (170) vorgesehen sind, dadurch gekennzeichnet, daß zwischen dem Kompressorrotor (172) und dem Turbinenrotor (170) ein Luftspalt (247) vorhanden ist, der in axialer Richtung der Welle (160) durch eine Kompressorgehäuse-Rückwand (100) und eine Turbinengehäuse-Rückwand (102) begrenzt ist und in dem die Steuermittel (246, 240) angeordnet sind.

2. Turbolader oder Strahlturbine nach Anspruch 1, gekennzeichnet durch Schmierungsmittel (222, 224) für eine nur begrenzte Schmierung der Lagermittel (162, 164).

3. Turbolader oder Strahlturbine nach Anspruch 1 oder 2, gekennzeichnet durch Schmierungsmittel (222, 224) zur Zufuhr eines Schmiermittelnebels zu den Lagermitteln (162, 164), um diese zu schmieren.

4. Turbolader oder Strahlturbine nach Anspruch 2 oder 3, dadurch gekennzeichnet, daß die Schmierungsmittel eine geneigte Umfangsrampe (226), die auf der Welle (160) ausgebildet und unter einem Winkel zu den Lagermitteln geneigt ist, sowie Schmiermittel (222, 224) zur Zufuhr eines Schmiermittels zur geneigten Rampe aufweist, so daß das Schmiermittel während der Drehung der Welle durch Zentrifugalkraft zum Lagermittel getragen wird.

5. Turbolader oder Strahlturbine nach Anspruch 4, dadurch gekennzeichnet, daß die Schmiermittel einen Docht (224) aufweisen, dessen eines Ende in Berührung mit dem Schmiermittel und dessen gegenüberliegendes Ende in Berührung mit der geneigten Rampe (226) steht.

6. Turbolader oder Strahlturbine nach einem der Ansprüche 1 bis 5, dadurch gekennzeichnet, daß das Steuermittel einen in seiner Winkelstellung bezüglich des Turbinenrotors (170) bewegbaren Steuerring (246), mit jeweils einer der Turbinenschaufeln (234) drehbaren und mit einem Ende in Eingriff mit dem Steuerring (246) stehenden Betätigungshebel (240), eine an einem der Betätigungshebel (240) angebrachte Steuerstange (86) sowie Mittel zur wahlweisen Bewegung der Steuerstange (86) aufweist, um die Winkelstellung des Steuerringes (246) zu verdrehen, wodurch die Betätigungshebel (240) und die an ihnen angebrachten Turbinenschaufeln (234) gedreht werden.

7. Turbolader oder Strahlturbine nach Anspruch 6, dadurch gekennzeichnet, daß der Steuerring (246) einen äußeren Ring (252) mit Öffnungen (244) zur Aufnahme des einen Endes (242) jedes Betätigungshebels (240), einen inneren Ring (250) und mehrere Kugeln (254) zwischen dem inneren und dem äußeren Ring (250, 252) aufweist, um eine Winkelverdrehung des äußeren Ringes (252) bezüglich des inneren Ringes (250) zu gestatten.

8. Turbolader oder Strahlturbine nach einem der Ansprüche 1 bis 6, dadurch gekennzeichnet, daß die Lagermittel (162, 164) auf der Welle ausgebildete, erste und zweite innere Laufringe (206, 210), einen an einem Lagergehäuse (60) befestigten und entsprechend dem ersten inneren Laufring (206) zur Aufnahme mehrerer Kugeln (208) zwischen sich und diesem positionierten äußeren Laufring (200), einen bezüglich des ersten äußeren Laufringes (200) verschiebbaren und benachbart zum zweiten inneren Laufring (210) zur Aufnahme mehrerer Kugeln (216) zwischen diesem und sich angeordneten zweiten äußeren Laufring (212) sowie Federmittel (218) zum Wegdrücken des zweiten äußeren Laufringes (212) vom ersten äußeren Laufring (200) aufweist, um die Kugeln (208, 216) zwischen dem ersten äußeren Laufring (200) und dem ersten inneren Laufring (206) und zwischen dem zweiten äußeren Laufring (212) und dem zweiten inneren Laufring (210) zu positionieren, wodurch die Welle (160) bezüglich des Gehäuses positioniert wird.

9. Turbolader oder Strahlturbine nach Anspruch 8, gekennzeichnet durch eine zweite geneigte Umfangsrampe (226), die auf der Welle (160) ausgebildet und zu den zwischen dem zweiten äußeren Laufring (212) und dem zweiten inneren Laufring (214) positionierten Kugeln (216) geneigt ist, und durch Schmierungsmittel zur Zufuhr eines Schmiermittels zur zweiten geneigten Rampe (226) über einen Docht (222), dessen eines Ende in Berührung mit dem Schmiermittel und dessen gegenüberliegendes Ende in Berührung mit der geneigten Rampe (226) steht, so daß das Schmiermittel der Rampe (226) zugeführt und während der Drehung der Welle (160) durch Zentrifugalkraft zu den Kugeln (216) getragen wird.

10. Turbolader oder Strahlturbine nach einem der Ansprüche 1 bis 9, dadurch gekennzeichnet, daß die Lagermittel (162, 164) in einem konzentrisch positionierten, zylindrischen Modul (60) angeordnet sind, der stromabwärts vom Kompressorrotor (172) im Lufteinlaß (50) befestigt und von den Einlaßwänden durch Streben (62) gehalten wird, die sich von der Einlaßwand (64) zum zylindrischen Modul (60) erstrecken, wobei die Streben (62) den Lufteinlaß (50) in mehr als einen Einlaßkanal unterteilen.

11. Turbolader oder Strahlturbine nach Anspruch 10, dadurch gekennzeichnet, daß der Lufteinlaß (50) eine von der Öffnung des Lufteinlasses (50) zum Kompressorrotor (172) konvergierende innere Wand (110, 131) aufweist.

12. Turbolader oder Strahlturbine nach Anspruch 10 oder 11, dadurch gekennzeichnet, daß der Durchmesser des Lufteinlasses (50) kleiner ist als die Länge des Lufteinlasses (50).

13. Turbolader oder Strahlturbine nach einem der Ansprüche 10 bis 12, dadurch gekennzeichnet, daß die Streben (62) eine vordere Kante (330) und eine hintere Kante (332) aufweisen, die dünner sind als der Bereich der Strebe (62) zwischen der vorderen und der hinteren Kante (330, 332).

14. Turbolader oder Strahlturbine nach Anspruch 13, dadurch gekennzeichnet, daß sich drei Streben (62) im wesentlichen radial vom zylindrischen Modul (60) zur Seitenwand des Lufteinlasses (50) erstrecken und den Lufteinlaß (50) in drei Einlaßkanäle unterteilen.

15. Turbolader oder Strahlturbine nach einem der Ansprüche 1 bis 14, gekennzeichnet durch einen zweiten stromabwärts vom Kompressorrotor (172) auf der Welle (160) befestigten Kompressorrotor (450).

16. Turbolader oder Strahlturbine nach Anspruch 15, dadurch gekennzeichnet, daß der zweite Kompressorrotor (450) an der Seite der Lagermittel (162, 164) gegenüber Kompressor- und Turbinenrotor (172, 170) auf der Welle (160) befestigt ist.

17. Turbolader oder Strahlturbine nach einem der Ansprüche 1 bis 16, gekennzeichnet durch eine Haltebuchse (160) mit einer sich durch sie erstreckenden Bohrung (180a) zur Befestigung der Buchse (180) auf der Welle (160) benachbart zum Kompressorrotor (172), wobei die Buchsenbohrung (180a) einen Durchmesser zur Bildung eines Festsitzes auf der Welle (160) hat, so daß die Buchse (180) allein eine Bewegung des Kompressorrotors (172) von der Welle (160) in Richtung der Buchse (180) verhindert.

18. Turbolader oder Strahlturbine nach Anspruch 17, gekennzeichnet durch zwischen der Haltebuchse (180) und dem Kompressorrotor (172) angeordnete Federmittel (422) zur Ausübung einer Kraft zwischen dem Kompressorrotor (172) und der Haltebuchse (180), um auf den Kompressorrotor (172) eine axiale Kraft ausgeübt zu halten.

19. Turbolader oder Strahlturbine nach Anspruch 17 oder 18, dadurch gekennzeichnet, daß die Buchse (180) auf ihrem äußeren Umfang Gewindegänge aufweist, um einen Eingriff zum Entfernen der Buchse (180) zu ermöglichen.

20. Turbolader oder Strahlturbine nach Anspruch 19, dadurch gekennzeichnet, daß der äußere Durchmesser der Buchse (180) so bemessen ist, daß sie von einer Bohrung (182), die im Kompressorrotor (172) ausgebildet ist, konzentrisch aufgenommen werden kann, so daß die Gewindegänge auf der Buchse (180) zum Abziehen der Buchse (180) von der Welle (160) ergriffen werden können.

21. Turbolader oder Strahlturbine nach einem der Ansprüche 17 bis 20, dadurch gekennzeichnet, daß die Welle (160) zur Verbesserung der Halterung der Buchse (180), jedoch zum Entfernen der Buchse (180) ohne Beschädigung der Welle (160) gehärtet ist.

**Revendications**

1. Turbocompresseur destiné à être utilisé avec un moteur à combustion interne ou turboréacteur, du type comprenant un arbre (160) qui est porté dans un carter, un rotor de turbine (170) qui est fixé sur cet arbre (160) de manière à recevoir des gaz moteurs, un rotor de compresseur (172) qui est fixé sur le même arbre (160) de manière à tourner avec ce rotor de turbine (170), ce rotor de compresseur (172) envoyant de l'air au moteur à partir d'une entrée d'air (50) dudit carter, et des moyens formant palier (162, 164) servant à porter ledit arbre (160) en rotation de manière telle que les rotors de compresseur et de turbine (172, 170) soient en porte-à-faux sur un côté de ces moyens formant palier, ces derniers (162, 164) étant disposés de façon que le rotor de turbine (170) soit séparé de ces moyens formant palier par le rotor de compresseur (172), dans lequel une série d'aubes de diffuseur (234) se trouve répartie autour du rotor de turbine (170) et dans l'entrée (230) de ce même rotor de turbine (170) à travers laquelle du gaz est envoyé à ce rotor (170), et dans lequel il est prévu des moyens de commande (246, 240) pour faire varier l'écoulement des gaz jusqu'au rotor de turbine (170), caractérisé en ce qu'un intervalle d'air (247) est prévu entre le rotor de compresseur (172) et le rotor de turbine (170) et est délimité dans la direction axiale dudit arbre (160) par une paroi arrière du carter de compresseur (100) et par une paroi arrière de carter de turbine (102), les moyens de commande (246, 240) étant situés dans cet intervalle d'air (247).

2. Turbocompresseur ou turboréacteur selon la revendication 1, caractérisé par des moyens de lubrification (222, 224) permettant de ne fournir qu'une lubrification limitée auxdits moyens formant palier (162, 164).

3. Turbocompresseur ou turboréacteur selon la revendication 1 ou 2, caractérisé par des moyens de lubrification (222, 224) permettant d'envoyer des embruns de lubrifiant sur lesdits moyens formant palier (162, 164) afin de fournir une lubrification à ceux-ci.

4. Turbocompresseur ou turboréacteur selon les revendications 2 ou 3, caractérisé en ce que lesdits moyens de lubrification comprennent des moyens du type à rampe circonférentielle inclinée (226) qui sont réalisés sur ledit arbre (160) et font un angle en direction desdits moyens formant palier, et des moyens de lubrification (222, 224) permettant de fournir un lubrifiant auxdits moyens du type à rampe inclinée de manière telle que ledit lubrifiant soit transporté par la force centrifuge vers lesdits moyens formant palier au cours de la rotation dudit arbre.

5. Turbocompresseur ou turboréacteur selon la revendication 4, caractérisé en ce que lesdits moyens de lubrification comprennent une mèche (224) ayant une extrémité en contact avec ledit lubrifiant et son extrémité opposée én contact avec ladite rampe inclinée (226).

6. Turbocompresseur ou turboréacteur selon l'une des revendications 1 à 5, caractérisé en ce que lesdits moyens de commande comprennent une couronne de commande (246) qui peut se déplacer angulairement par rapport audit rotor de turbine (170), un levier de manœuvre (240) qui peut tourner avec chaque aube de diffuseur (234) et présente une extrémité en prise dans ladite couronne de commande (246), une tige de commande (86) qui est fixée à l'un desdits leviers de manœuvre (240) et des moyens (80) permettant de déplacer sélectivement ladite tige de commande (86) afin de faire tourner angulairement ladite couronne de commande (246), faisant ainsi tourner lesdits leviers de manœuvre (240) et les aubes de diffuseur (234) qui y sont fixées.

7. Turbocompresseur ou turboréacteur selon la revendication 6, caractérisé en ce que ladite couronne de commande (246) comprend une bague extérieure (252) dans laquelle sont ménagées des ouvertures (244) pour recevoir ladite extrémité (242) de chacun des leviers de manœuvre (240), une bague intérieure (250), et plusieurs billes (254) assemblées entre lesdites bagues intérieure et extérieure (250, 252) afin de permettre une rotation annulaire de cette bague extérieure (252) par rapport à cette bague intérieure (250).

8. Turbocompresseur ou turboréacteur selon l'une des revendications 1 à 6, caractérisé en ce que lesdits moyens formant palier (162, 164) comprennent des premier et second chemins de roulement intérieurs (206, 210) qui sont ménagés dans .ledit arbre, une première bague de chemin de roulement extérieur (200) qui est fixée sur un carter de palier (60) et est positionnée de manière à correspondre audit premier chemin de roulement intérieur (206) afin de recevoir entre eux une série de billes (208), une seconde bague de chemin de roulement extérieur (212) qui peut coulisser par rapport à ladite première bague de chemin de roulement extérieur (200) et est positionnée au voisinage dudit second chemin de roulement intérieur (210) afin de recevoir entre eux une série de billes (216), et des moyens élastiques (218) permettant de repousser ladite seconde bague de chemin de roulement extérieur (212) à l'écart de ladite première bague de chemin de roulement extérieur (200) afin de positionner les billes (208, 216) entre cette dite première bague de chemin de roulement extérieur (200) et le premier chemin de roulement intérieur (206) et entre cette seconde bague de chemin de roulement extérieur (212) et le second chemin de roulement intérieur (210), assurant ainsi le positionnement dudit arbre (160) par rapport audit carter.

9. Turbocompresseur ou turboréacteur selon la revendication 8, caractérisé par une seconde rampe circonférentielle inclinée (226) qui est réalisée sur ledit arbre (160) et fait un angle en direction des billes (216) disposées entre la seconde bague de chemin de roulement extérieur (212) et ledit second chemin de roulement intérieur (214), et par des moyens de lubrification permettant de fournir un lubrifiant à cette seconde rampe inclinée (226) par l'intermédiaire d'un mèche (222) qui présente une extrémité en contact avec ledit lubrifiant et son extrémité opposée en contact avec la rampe inclinée (226), de manière telle que ledit lubrifiant soit appliqué à cette rampe (226) et transporté par la force centrifuge jusqu'aux billes (216) au cours de la rotation dudit arbre (160).

10. Turbocompresseur ou turboréacteur selon l'une des revendications 1 à 9, caractérisé en ce que lesdits moyens formant palier (162, 164) sont placés dans un module cylindrique (60) disposé de manière concentrique qui est monté à l'intérieur de ladite entrée d'air (50) en amont du rotor de compresseur (172) et est porté à partir des parois d'entrée par des entretoises (62) qui s'étendent de la paroi d'entrée (64) jusqu'au module cylindrique (60), lesdites entretoises (62) divisant l'entrée d'air (50) en plus d'un passage d'entrée.

11. Turbocompresseur ou turboréacteur selon la revendication 10, caractérisé en ce que ladite entrée d'air (50) présente une paroi interne convergente (110, 131) depuis l'embouchure de l'entrée d'air (50) jusqu'au rotor de compresseur (172).

12. Turbocompresseur ou turboréacteur selon les revendications 10 ou 11, caractérisé en ce que le diamètre de ladite entrée d'air (50) est plus court que la longueur de cette entrée d'air (50).

13. Turbocompresseur ou turboréacteur selon l'une des revendications 10 à 12, caractérisé en ce que lesdites entretoises (62) sont réalisées avec un bord d'attaque (330) et un bord de fuite (332) plus minces que la partie de l'entretoise (62) située en position intermédiaire entre ces bords d'attaque et de fuite (330, 332).

14. Turbocompresseur ou turboréacteur selon la revendication 13, caractérisé en ce que trois entretoises (62) s'étendent de manière sensiblement radiale depuis ledit module (60) jusqu'à la paroi latérale de l'entrée d'air (50), en divisant cette entrée d'air (50) en trois passages d'entrée.

15. Turbocompresseur ou turboréacteur selon l'une des revendications 1 à 14, caractérisé par un second rotor de compresseur (450) qui est monté sur ledit arbre (160) en amont dudit rotor de compresseur (172).

16. Turbocompresseur ou turboréacteur selon la revendication 15, caractérisé en ce que ledit second rotor de compresseur (450) est monté sur ledit arbre (160) du côté des moyens formant paliers (162, 164) qui est opposé auxdits rotors de compresseur et de turbine (172, 170).

17. Turbocompresseur ou turboréacteur selon l'une des revendications 1 à 16, caractérisé par un manchon de retenue (180) qui présente un alésage (180a) le traversant pour permettre le montage de ce manchon (180) sur ledit arbre (160) au voisinage du rotor de compresseur (172), ledit alésage de manchon (180a) ayant un diamètre constituant un ajustement à tolérance négative sur l'arbre (160) de manière telle que le manchon (180) seul empêche le rotor de compresseur (172) de subir un mouvement l'éloignant de l'arbre (160) suivent la direction de ce manchon (180).

18. Turbocompresseur ou turboréacteur selon la revendication 17, caractérisé par des moyens élastiques (422) qui sont disposés entre ledit manchon de retenue (180′) et le rotor de compresseur (172′) afin d'appliquer une force entre ce rotor de compresseur (172′) et ce manchon de retenue (180′) dans le but de maintenir une force axiale sur ce même rotor de compresseur (172′).

19. Turbocompresseur ou turboréacteur selon la revendication 17 ou 18, caractérisé en ce que ledit manchon (180) est réalisé avec un filetage autour de sa périphérie extérieure de manière à permettre une prise de ce manchon (180) en vue de son extraction.

20. Turbocompresseur ou turboréacteur selon la revendication 19, caractérisé en ce que ledit manchon (180) présente un diamètre extérieur dimensionné de manière à être reçu à l'intérieur d'un alésage (182) ménagé dans le rotor de compresseur (172) de manière concentrique à l'ouverture réalisée dans ce rotor (172), de sorte qu'on peut venir en prise sur le filetage ménagé sur ce manchon (180) afin d'extraire ce manchon (180) dudit arbre (160).

21. Turbocompresseur ou turboréacteur selon l'une des revendications 17 à 20, caractérisé en ce que l'arbre (160) est durci de manière à faciliter une retenue dudit manchon (180) sur lui, mais à permettre une extraction de ce manchon (180) sans endommagement de l'arbre (160).

FIG. 2

FIG. 1

FIG.3

FIG.4

FIG.5

FIG. 6

FIG. 8

FIG. 7

FIG. 9

FIG. 10

330  336  332
334  222  224

FIG. 11

330  336  332
334

FIG. 12

330  336  332
334

24  126  126a
126b

FIG. 13

25

FIG. 14

FIG. 15

EP 0 030 230 B2

FIG. 16

EP 0 030 230 B2

FIG. 17

FIG. 19

FIG. 20

FIG. 18

FIG. 21

FIG. 22